(19) Europäisches Patentamt
European Patent Office
Office européen des brevets

(11) Veröffentlichungsnummer: **0 051 182**
**B1**

# (12) EUROPÄISCHE PATENTSCHRIFT

(45) Veröffentlichungstag der Patentschrift: **27.06.84**

(51) Int. Cl.³: **C 08 B 11/10**

(21) Anmeldenummer: **81108357.5**

(22) Anmeldetag: **15.10.81**

## (54) Verfahren zur Herstellung von wasserlöslichen Phosphonomethylethern der Cellulose.

(30) Priorität: **23.10.80 DE 3039978**

(43) Veröffentlichungstag der Anmeldung: **12.05.82 Patentblatt 82/19**

(45) Bekanntmachung des Hinweises auf die Patenterteilung: **27.06.84 Patentblatt 84/26**

(84) Benannte Vertragsstaaten: **DE FR GB**

(56) Entgegenhaltungen:
**DE - A - 2 557 576**
**US - A - 2 979 374**

**ABSTRACT BULLETIN OF THE INSTITUTE OF PAPER CHEMISTRY, Band 41, Nr. 1, Seite 202, Zusammenfassung Nr. 2007(U), O. VAITIEKUNAITE et al.: "Etherification of cotton linters with sodium salt of chloromethylphosphonic acid"**

(73) Patentinhaber: **HOECHST AKTIENGESELLSCHAFT, Postfach 80 03 20, D-6230 Frankfurt am Main 80 (DE)**

(72) Erfinder: **Brandt, Lothar, Dr., Alfred-Schumann-Strasse 23, D-6200 Wiesbaden (DE)**
Erfinder: **Holst, Arno, Dr., Drususstrasse 3, D-6200 Wiesbaden (DE)**

**EP 0 051 182 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von wasserlöslichen Phosphonomethylethern der Cellulose (PMC) in einem wäßrigen, ein organisches Lösemittel enthaltenden alkalischen Medium.

Einen anionaktiven Substituenten tragende Celluloseether werden für viele Verfahren und Anwendungsgebiete als Hilfsmittel (wie als Schutzkolloid, Flockungsmittel, Binde- und Klebemittel, Dispergierhilfsmittel, Filmbildner) und/oder wasserlöslicher Verdicker eingesetzt, dazu zählen beispielsweise die Seifen- und Waschmittelherstellung, die Papierherstellung, die Baustoffherstellung und -anwendung, die Faserverarbeitung, die Lack- und Farbenherstellung, die Herstellung von Lebens- und Genußmitteln und die Pharmazie und Kosmetik. Das bekannteste Handelsprodukt dieser Art von Celluloseether ist die Carboxymethylcellulose (CMC), die üblicherweise in der Form des Na-Salzes (NaCMC) vertrieben wird; von gewisser Bedeutung sind auch andere Carboxyalkylether oder Sulfoalkylether der Cellulose, aber auch Mischether, die neben dem anionaktiven Substituenten (in der Regel Carboxymethyl) noch andere Ethergruppen enthalten. Wenn man mehrbasische anionaktive Substituenten an das Cellulosemolekül bringen will, so bieten sich dazu insbesondere organische Phosphonsäuren oder ihre Derivate an. Die Umsetzung von Cellulose mit Phosphorsäure führt nämlich zu Celluloseestern, d. h. einer direkten Verknüpfung des Cellulosemoleküls über eine Sauerstoffbrücke mit dem Phosphorsäurerest; die Umsetzung mit reaktiven, organischen Phosphonsäuren oder ihren Derivaten (z. B. Halogen-alkanphosphonsäuren) kann zu Celluloseethern führen, die im Ethersubstituenten eine Phosphonsäuregruppe oder eine ihrer Salzformen tragen, d. h. sie führt zu einer Verknüpfung des Cellulosemoleküls über eine Sauerstoffbrücke und eine organische Brücke mit dem Phosphonsäurerest. Die genannten Celluloseester sind relativ leicht hydrolysierbare Verbindungen, die auch leicht vernetzen können; hingegen sind die Celluloseether stabile Verbindungen, bei denen auch eine Vernetzung nicht ohne weiteres auftritt. Diese Celluloseether mit Phosphonsäuregruppen sind in der Regel wasserunlöslich, da die Reaktion mit beispielsweise Halogen-alkanphosphonsäuren zu mehr als sehr niedrigen Substitutionsgraden nicht ohne weiteres möglich ist; es sind aber auch bereits wasserlösliche Produkte bekanntgeworden:

In der US-PS 2 979 374 oder dem Aufsatz »Phosphonomethylation of Cotton« (Phosphonomethylierung von Baumwolle) von G. L. Drake, W. A. Reeves und J. D. Guthrie in Textile Research Journal, März 1959, Seiten 270 bis 275, werden chemisch modifizierte, fasrige, textile Materialien auf Cellulosebasis und ein Verfahren zu deren Herstellung beschrieben, bei denen einige der Hydroxylgruppen des Polysaccharids durch $-O-CH_2-PO_3X_2$-Gruppen ersetzt sind, wobei der Modifizierungsgrad bei 0,01 bis 4 Gew.-% liegen soll; X bedeutet in der allgemeinen Formel entweder H, ein Alkalimetall oder $NH_4$. In dem Verfahren zur Herstellung dieser Produkte wird das fasrige Ausgangsmaterial mit einer wäßrigen Lösung eines Alkalimetallsalzes der Chlormethanphosphonsäure oder einem anderen Salz dieser Säure und einem Überschuß an Alkalimetallhydroxid umgesetzt; die erhaltenen Produkte können auch noch in die freie Säureform oder in die entsprechenden Ammoniumsalze umgewandelt werden. Auch wasserlösliche Phosphonomethylether der Cellulose können hergestellt werden, wenn der Modifizierungsgrad so gewählt wird, daß 2 und mehr Gew.-% an Phosphor eingeführt werden. Als Ausgangsmaterialien werden genannt: Baumwollfasern, Cellulosehydratfasern, aminierte Baumwollfasern, carboxymethylierte Baumwollfasern, Papier und sulfoethylierte Baumwollfasern. Die Phosphonomethyl-Gruppen können entweder durch Einsatz eines Metallsalzes der Chlor-methanphosphonsäure selbst oder des Säurechlorids eingebracht werden, auch der Einsatz der entsprechenden Mono- oder Diester soll möglich sein. Die wäßrige Reaktionslösung enthält 10 bis 30 Gew.-% freies Alkalimetallhydroxid und 1 bis 30 Gew.-% an Alkalimetallsalz der Chlor-methanphosphonsäure, die Reaktion wird nach Aufnahme von 125 bis 200 Gew.-% an Reaktionslösung durch die Baumwolle bei 75 bis 115°C während 5 bis 30 min oder bei 140 bis 160°C während 2 bis 10 min durchgeführt. Die wasserlöslichen Produkte werden mit Reaktionslösungen, die 20 bis 25 Gew.-% NaOH und 10 bis 20 Gew.-% Chlor-methanphosphonsäure enthalten, bei 120 bis 150°C während 5 bis 30 min erhalten. Im einzigen Beispiel der Herstellung einer wasserlöslichen Phosphonomethylcellulose wird Baumwolle mit einer Lösung von 35,1 Gew.-Teilen Chlor-methanphosphonsäure, 96,5 Gew.-Teilen NaOH und 180 Gew.-Teilen Wasser bis zu einer Aufnahme an Lösung von 196 Gew.-% behandelt; nach dem Erhitzen auf 140°C während 30 min wird mit 20 Gew.-% Ethanol enthaltendem Wasser gewaschen; je nach Art des Ausgangsmaterials werden Phosphor-Gehalte von 2,12 oder 2,4 Gew.-% im wasserlöslichen Produkt bestimmt.

Die vernetzten Phosphonoalkylcellulosen nach der DE-OS 2 600 930 (= US-PS 4 020 271) bestehen aus solchen Grundkörpern, die ohne Vernetzung an sich wasserlöslich wären, aber durch die Vernetzung mit Formaldehyd, Epichlorhydrin, Dichloressigsäure, Diepoxiden oder anderen bekannten bifunktionellen Komponenten im wesentlichen wasserunlöslich gemacht werden. Zur Durchführung der Veretherungsstufe wird auf die vorher erwähnte US-PS 2 979 374 verwiesen.

Aus der DE-OS 1 493 227 (= US-PS 3 388 118) ist ein Verfahren zur Herstellung modifizierter Polysaccharide bekannt, bei dem zunächst Chloracetamidomethylcellulose oder eine ähnliche Verbindung mit aktivem Halogen hergestellt, und diese Zwischenverbindung dann mit Trialkylphosphiten umgesetzt wird. Die erhaltenen Produkte sind keine Celluloseether, sie enthalten Stickstoff und Phosphor im Substituenten; die erste Reaktionsstufe wird in wäßriger Lösung von z. B. N-Methylol-chlor-acetamid, die zweite Reaktionsstufe in einer Lösung des Phosphits in Dimethylformamid (DMF) ausgeführt. Die

Reaktionsprodukte sind wasserunlöslich.

Die Verfahren zur Herstellung von Ionenaustauschern gemäß der DE-AS 2 005 407 (= US-PS 3 634 394) oder der DE-AS 2 005 408 (= US-PS 3 652 540) können auch zu solchen Produkten führen, die einen Phosphonomethylrest tragen; dazu werden beispielsweise Perlen aus regenerierter Cellulose in Toluol in Anwesenheit von Benzethoniumchlorid

$$[CH_3-C(CH_3)_2-CH_2-C(CH_3)_2-C_6H_4-(O-CH_2-CH_2)_2-N^{\oplus}(CH_3)_2-CH_2-C_6H_5, Cl^-]$$

mit einer NaOH, $NaBH_4$, Wasser und Chlor-methanphosphonsäure enthaltenden Lösung während 16 h bei 90° C umgesetzt, das erhaltene Produkt ist wasserunlöslich.

Bei den bekannten Verfahren zur Herstellung von wasserlöslichen Phosphonomethylethern der Cellulose (PMC) müssen Temperaturen von mehr als 100° C angewandt werden, um die im Vergleich zu anderen Veretherungsreagentien (z. B. Monochloressigsäure) reaktionsträgere Halogenmethanphosphonsäure bzw. eines ihrer Salze zu aktivieren. In dem Reaktionsmedium anwesendes Wasser wird während der Reaktion weitgehend verdampft, so daß die Veretherungsreaktion im fast-trockenen Gemisch stattfindet. Erfahrungsgemäß werden bei derartigen »Trocken«-Verfahren, bei denen die Quellung der Alkalicellulose verhältnismäßig gering ist, meist eher ungleichmäßig veretherte Produkte mit hohen Anteilen an unsubstituierten Kettenteilen erhalten; dies gilt insbesondere bei — wie im vorliegenden Fall — niedrigsubstituierten Produkten (z. B. bei einem DS von weniger als 0,4). Im Fall der geplanten Herstellung wasserlöslicher Celluloseether führt dies auch bei an sich zur Wasserlöslichkeit ausreichenden Substitutionsgraden zu Produkten, die trübe, faserhaltige Lösungen mit Rückständen ergeben, so daß sie für viele Anwendungsgebiete nicht geeignet sind. Die hohen Temperaturen wirken sich ebenfalls ungünstig auf die Stabilität der Polymerkette aus, da ein oxidativer Kettenabbau eintreten kann, so daß die so hergestellten Celluloseether in Lösung nur niedrige Viskositäten erzeugen und damit beispielsweise als Verdicker wenig wirksam sind.

Die anderen bekannten Verfahren führen nicht zu wasserlöslichen Phosphonomethylcellulosen bzw. nicht zu Ethergruppierungen und werden entweder ebenfalls bei einer über 100°C liegenden Temperatur und unter Zuhilfenahme einer »Kuppelkomponente« oder bei einer zwar unter 100°C liegenden Temperatur durchgeführt, aber unter Zufügung mehrerer Hilfsstoffe und mit langen Reaktionszeiten.

Aufgabe der vorliegenden Erfindung ist es deshalb, ein Verfahren vorzuschlagen, das die Herstellung von rückstandsarmer, wasserlöslicher PMC bei niedrigerer Temperatur und ohne nennenswerten Kettenabbau in wirtschaftlicher Weise ermöglicht.

Die Erfindung geht aus von dem Verfahren zur Herstellung von wasserlöslichen Phosphonomethylethern der Cellulose aus Cellulose und Halogen-methanphosphonsäure oder einem ihrer Salze oder Säurederivate in einem wäßrigen, alkalischen Medium. Das erfindungsgemäße Verfahren ist dadurch gekennzeichnet, daß man pro Mol Cellulose

2,1 bis 15 Mol Hydroxid-Ionen und
0,4 bis 3,0 Mol Halogen-methanphosphonat-Ionen als Veretherungsmittel

in 3 bis 50 Gew.-Teilen, pro Gew.-Teil Cellulose, eines Gemisches aus einem inerten, bevorzugt mit $H_2O$ mischbaren organischen Lösemittel und $H_2O$, wobei der Wasseranteil 2 bis 60 Gew.-% beträgt, zur Reaktion bringt bis die Phosphonomethylcellulose einen DS von mindestens 0,13 aufweist.

In einer bevorzugten Ausführungsform des erfindungsgemäßen Verfahrens wird so gearbeitet, daß man pro Mol Cellulose 2,5 bis 8 Mol Hydroxid-Ionen und 0,6 bis 1,5 Mol Halogen-methanphosphonat-Ionen als Veretherungsmittel in 5 bis 20 Gew.-Teilen, pro Gew.-Teil Cellulose, eines Gemisches aus einem inerten, bevorzugt mit $H_2O$ mischbaren organischen Lösemittel und $H_2O$, wobei der Wasseranteil 3 bis 40 Gew.-% beträgt, zur Reaktion bringt bis die Phosphonomethylcellulose einen DS von mindestens 0,18 aufweist. Das Verfahren kann diskontinuierlich oder auch kontinuierlich in einem der von der Celluloseetherchemie her bekannten Aggregate durchgeführt werden; wenn die Temperatur des Reaktionsgemisches so hoch gewählt wird, daß sie über der Siedetemperatur des Lösemittel/$H_2O$-Gemisches liegt, empfiehlt sich die Durchführung des erfindungsgemäßen Verfahrens in einer Druckapparatur.

Die angegebene Zusammensetzung des Reaktionsgemisches gibt lediglich die Summe der Anteile der zur Reaktion erforderlichen Bestandteile zu Beginn der Veretherungsstufe an, dann liegt z. B. bei separater Alkalisierungsstufe bereits ein Teil der Cellulose und des Alkalimetallhydroxids als Alkalicellulose vor, und durch die Neutralisation von als Säure, als hydrolysierbarem Säurederivat oder Monosalz eingesetztem Veretherungsmittel entsteht zusätzliches Wasser. Das Veretherungsmittel kann außer in der Säureform auch in der Form des Mono- oder Disalzes oder eines anderen alkalisch hydrolysierbaren Derivats eingesetzt werden, auch eine vorherige Teilneutralisation der Säurefunktion(en) auf Zwischenstufen ist möglich, die erforderliche Einsatzmenge liegt dann natürlich höher als die für die freie Säure einzusetzenden Mengen; d. h. der Begriff »Halogen-methanphosphonat-Ionen« wurde gewählt, um eine einheitliche Berechnungsgrundlage zu haben. Die angegebene Menge an »Hydroxid-Ionen« bezieht sich auf die zur Alkalisierung und Veretherung erforderliche Menge, die zur

Neutralisation von im Veretherungsmittel noch vorliegenden Wasserstoffionen oder zur Hydrolyse erforderliche Menge an »Hydroxid-Ionen« muß noch dazugerechnet werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfasrig angelieferten Cellulose zu »Pulvern« erreicht werden kann.

Die »Hydroxid-Ionen« werden bevorzugt als Alkalimetallhydroxid — üblicherweise NaOH, aber auch KOH oder LiOH — in fester Form oder in gelöster Form als wäßrige Alkalimetallhydroxid-Lösung eingesetzt, aber auch quartäre Ammoniumbasen können verwendet werden. Als inerte, bevorzugt mit Wasser mischbare organische Lösemittel kommen insbesondere Isopropanol, Aceton, Hexan, Dioxan, tert.-Butanol oder Gemische dieser Lösemittel in Betracht, wobei diese auch bereits mit Wasser vermischt sein können. Sofern das besonders bevorzugte Isopropanol als organisches Lösemittel eingesetzt wird, sollte das Gemisch an Lösemittel/$H_2O$ so eingestellt werden, daß der Wasseranteil 3 bis 20 Gew.-%, insbesondere 5 bis 13 Gew.-% beträgt. Die Wiedergewinnung und Wiederverwendung des besonders bevorzugt eingesetzten Isopropanols ist verhältnismäßig einfach, da oftmals die nach beendeter Veretherung auf mechanischem Wege (z. B. Filtration, Dekantieren oder Abschleudern) von den festen Anteilen abgetrennten flüssigen Bestandteile des Veretherungsgemisches aus solchen Isopropanol/$H_2O$-Gemischen bestehen, daß sie unmittelbar oder nach Zusatz von wenig wasserfreiem Isopropanol wieder zur Herstellung des Reaktionsgemisches verwendbar sind; auch destillative Reinigungsmethoden zur umweltfreundlichen Rückgewinnung des organischen Lösemittel-Anteils sind möglich und im vorliegenden Verfahren zweckmäßig, um das Lösemittel von den bei der Neutralisation und Reaktion entstehenden Salzen abzutrennen.

Anstelle der bevorzugt als Veretherungsmittel — d. h. zur Erzeugung der Halogen-methanphosphonat-Ionen — einzusetzenden Chlor-methanphosphonsäure oder ihrem Mono- oder Dinatriumsalz können auch deren alkalisch hydrolysierbare Derivate (z. B. Säurechloride oder Ester), andere lösliche Salze wie Kalium- oder Ammoniumsalze, oder auch die entsprechenden Brom- oder Jod-methanphosphonsäuren bzw. ihre Derivate oder Salze verwendet werden. Um wasserlösliche, d. h. nicht mehr als 10 Gew.-%, insbesondere nicht mehr als 5 Gew.-% wasserunlösliche Anteile aufweisende Veretherungsprodukte zu erzielen, sollte der Substitutionsgrad (DS, d. h. die mittlere Anzahl von substituierten OH-Gruppen pro Anhydro-D-glucose-Einheit, die zwischen 0,0 und 3,0 liegt) mindestens 0,13 betragen, wobei die Phosphonomethylcellulose (PMC) dann ohne größeren Aufwand in Wasser vollständig oder nahezu vollständig aufgelöst werden kann; im wesentlichen aus Gründen der Verfahrensökonomie, d. h. einem vernünftigen Maß in der eingesetzten Veretherungsmittelmenge, bringen DS-Werte von mehr als 1,2 keine entscheidenden Vorteile mehr. Bevorzugt liegt der Bereich für den DS-Wert zwischen 0,18 und 0,8. Den weiter oben in Mol angegebenen Mengenanteilen an Veretherungsmittel und an zur Veretherung erforderlichen Hydroxid-Ionen entsprechen bei Einsatz von Chlor-methanphosphonsäure und NaOH in etwa die folgenden Gewichtsmengen (bezogen auf 1 Gew.-Teil Cellulose) von 0,3 bis 2,3 Gew.-Teilen, bevorzugt 0,4 bis 1,2 Gew.-Teilen an Veretherungsmittel und 0,2 bis 11 Gew.-Teilen, bevorzugt 0,3 bis 5,5 Gew.-Teilen an NaOH. Die Reaktionsprodukte fallen bei der Reaktion üblicherweise zunächst als dibasische Salze an, die durch Zugabe von Säure, z. B. bei Neutralisation mit Essigsäure bis zum Neutralbereich (pH von 5 bis 8), in die monobasische Salzform oder, z. B. bei überschüssiger Mineralsäurezugabe, in die freie Säure überführbar sind. Aus den monobasischen Salzformen bzw. der freien Säure können durch Zugabe von Basen wie Metallhydroxid oder Ammoniumhydroxid wieder Salze erzeugt werden.

Bei der praktischen Durchführung des erfindungsgemäßen Verfahrens wird zweckmäßig zuerst die Cellulose im Gemisch aus organischem Lösemittel, Wasser und Alkalimetallhydroxid (oder quartäre Ammoniumbase) alkalisiert, wonach die Zugabe des Veretherungsmittels erfolgt. Es ist aber auch eine Alkalisierung ohne Anwesenheit von organischem Lösemittel möglich, wonach dessen Zugabe erst bei der Veretherungsstufe erfolgt, oder auch eine Zugabe der vollständigen Alkalimetallhydroxidmenge bei der Veretherungsstufe, die dann gleichzeitig die Alkalisierungsstufe darstellt, d. h. ein separates Alkalisieren ist dann nicht erforderlich. Alle Stufen, gleichgültig ob als separate Alkalisierungs- oder Veretherungsstufe oder als Kombination beider Stufen durchgeführt, werden in der Regel in mit Rührern versehenen Apparaten gefahren. In der separaten Alkalisierungsstufe wird üblicherweise bei Raumtemperatur (etwa 15 bis 35°C) gearbeitet, die Veretherung verläuft besonders erfolgreich bei einer Temperatur von 70 bis 100°C, insbesondere bei 80 bis 90°C. Bei Durchführung der Alkalisierung und Veretherung in einer Stufe kann diese zunächst einige min bei Raumtemperatur gefahren werden, bevor auf die endgültige, zur Veretherung erforderliche Temperatur erhöht wird. Wenn Isopropanol als organisches Lösemittel verwendet wird und das Verfahren ohne Einsatz von Druckaggregaten ablaufen soll, empfiehlt sich ein Arbeiten unterhalb der Siedetemperatur des 87%igen azeotropen Gemisches an Isopropanol/$H_2O$ von 82°C. Da von den anderen Verfahren zur Herstellung von wasserlöslichen Celluloseethern zwar bekannt ist, daß bestimmte organische Lösemittel — möglicherweise durch positiven Einfluß auf die Quellung der Alkalicellulose — eine Vergleichmäßigung der Substitution längs der Polysaccharidkette bewirken können, ohne daß aber die erforderliche Minimaltemperatur im Vergleich zu entsprechenden Verfahren ohne organisches Lösemittel (z. B. in den sogenannten

»Trocken«-Verfahren) gesenkt werden konnte, ist es besonders überraschend, daß im erfindungsgemäßen Verfahren bereits ein Durchführen der Reaktion bei Temperaturen von unter 100°C möglich und sogar besonders vorteilhaft ist. Die erforderlichen Zeiten in der Veretherungsstufe liegen — je nach Reaktionstemperatur — im allgemeinen zwischen 30 min und 8 h, beispielsweise ist bei 80°C eine Veretherungszeit von mindestens etwa 2 h erforderlich, bei 90°C in einer Druckapparatur hingegen genügen bereits 45 min. In einer Trennvorrichtung (z. B. einer Zentrifuge) wird das Rohprodukt, gegebenenfalls nach Zugabe von Säure (zur Herstellung der monobasischen Salzform oder der freien Säure), von den flüssigen Komponenten befreit und mehrmals bevorzugt mit wäßrigem Alkohol salzfrei gewaschen, danach wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführlichere Beschreibung.

Die Verfahrensparameter und die Mengenanteile der eingesetzten bzw. entstehenden Komponenten unterliegen u. a. folgenden Rahmenbedingungen:

- Ein zu hoher Wassergehalt im Reaktionsgemisch läßt den Wirkungsgrad der Veretherungsreaktion merklich zurückgehen.
- Ein zu niedriger Wassergehalt vermindert die Quellung der Alkalicellulose und führt damit zu einer ungleichmäßigen Substitution.
- Ein zu niedriger Alkaligehalt, beispielsweise von weniger als 2 Mol NaOH pro Mol eingesetztem Veretherungsmittel, führt zu sehr niedrigen Substitutionsausbeuten, nach oben sind der Alkalimenge hauptsächlich technische und wirtschaftliche Grenzen gesetzt.
- Größere Mengen an bei der Reaktion entstehenden oder von vornherein anwesenden Fremdelektrolyten wie z. B. NaCl wirken sich ausbeutesenkend aus. Dieser Effekt wird auch durch zu große Mengen an eingesetztem Veretherungsmittel bewirkt, und ist dann nur durch gleichzeitige Erhöhung des Anteils an Alkalimetallhydroxid und organischem Lösemittel in etwa wieder auszugleichen; der unbeschränkten Erhöhung dieser Mengen sind naturgemäß wirtschaftliche Grenzen gesetzt.
- Die Substitutionsausbeute der Phosphonomethylierung, d. h. der tatsächlich erzielte DS-Wert bezogen auf die eingesetzte molare Menge des Veretherungsmittels pro Mol der Anhydro-D-glucose-Einheit der Cellulose, kann im erfindungsgemäßen Verfahren etwa 40% und mehr betragen, bei Einsätzen von weniger als 0,4 Mol an Veretherungsmittel ist zwar die Substitutionsausbeute auf höhere Werte steigerbar, aber die dann erzielbaren DS-Werte sind für ein gut-wasserlösliches Produkt zu niedrig; bei Einsätzen von wesentlich mehr als etwa 2 Mol an Veretherungsmittel nimmt hingegen die Substitutionsausbeute wieder ab.

Die nach dem erfindungsgemäßen Verfahren herstellbaren Phosphonomethylcellulosen (PMC) können auf den Gebieten der Technik eingesetzt werden, die auch von anderen anionaktiven Celluloseethern wie CMC her bekannt sind. Die neutralen wäßrigen Lösungen der Phosphonomethylcellulosen zeigen schwache Thixotropie. Auf Zusatz von mehrwertigen Metallionen wie $Ca^{2+}$ oder $Al^{3+}$ flocken die Phosphonomethylcellulosen aus ihrer neutralen Lösung aus.

In den folgenden Beispielen verhalten sich Gew.-Teile zu Vol.-Teilen wie g zu $cm^3$, die Prozentangaben sind auf das Gewicht bezogen. Die angegebenen Viskositätswerte wurden im Höppler-Kugelfallviskosimeter in 2%iger wäßriger Lösung bei 20°C bestimmt.

## Beispiel 1

Es werden 50 Gew.-Teile Fichtenzellstoff einer mittleren Teilchengröße von 0,5 mm in 1100 Vol.-Teilen (= 865 Gew.-Teilen) 100%igen Isopropanols suspendiert und nach Zugabe von 205 Gew.-Teilen einer 43,5%igen wäßrigen NaOH-Lösung (= 7,7 Mol pro 1 Mol Cellulose) wird während 30 min unter Rühren bei Raumtemperatur alkalisiert. Die Veretherung wird mit 90 Gew.-Teilen des Mononatriumsalzes der Chlor-methanphosphonsäure (= 2,0 Mol pro 1 Mol Cellulose) bei 80°C während 5 h durchgeführt, danach wird abgekühlt, mit Essigsäure gegen Phenolphthalein neutralisiert und die festen Reaktionsprodukte werden von den flüssigen Komponenten abgetrennt. Der feste Rückstand wird mehrmals in 500 Vol.-Teilen eines 70%igen wäßrigen Isopropanols suspendiert und es wird jeweils wieder eine Trennung der festen von der flüssigen Phase vorgenommen, dies wird so oft wiederholt, bis die flüssige Phase praktisch salzfrei ist. Nach dem Trocknen des festen Reaktionsprodukts bei 70°C wird es zu einem Pulver gemahlen; es werden 71 Gew.-Teile einer PMC mit einem DS von 0,61 in der Mono-Na-Salzform erhalten, die in Wasser mit etwa 3% Rückstand an unlöslichen Anteilen löslich ist; die Viskosität beträgt 90 mPa · s, wäßrige Lösungen sind schwach-thixotrop.

Beispiel 2

Es werden 50 Gew.-Teile Buchenzellstoff einer mittleren Teilchengröße von 0,5 mm in 675 Vol.-Teilen (= 700 Gew.-Teilen) 100%igen Dioxans suspendiert und nach Zugabe von 79 Gew.-Teilen einer 37%igen wäßrigen NaOH-Lösung (= 2,5 Mol pro 1 Mol Cellulose) wird während 60 min unter Rühren bei Raumtemperatur alkalisiert. Die Veretherung wird mit 23 Gew.-Teilen des Mononatriumsalzes der Chlormethanphosphonsäure (= 0,5 Mol pro 1 Mol Cellulose) bei 90° C während 3 h durchgeführt. Es wird nach den Angaben im Beispiel 1 aufgearbeitet, das Mono-Na-Salz der PMC wird in einer Menge von 52 Gew.-Teilen erhalten und weist einen DS von 0,14 auf, ist in Wasser mit einem Rückstand von etwa 8% löslich und zeigt eine Viskosität von 970 mPa · s.

Beispiel 3

Es werden 50 Gew.-Teile des Buchenzellstoffs nach Beispiel 2 in 1140 Vol.-Teilen (= 895 Gew.-Teilen) 100%igen Isopropanols suspendiert, und nach Zugabe von 112 Gew.-Teilen einer 50%igen wäßrigen NaOH-Lösung (= 4,8 Mol pro 1 Mol Cellulose) wird während 45 min unter Rühren bei Raumtemperatur alkalisiert. Die Veretherung wird mit 45 Gew.-Teilen des Mononatriumsalzes der Chlor-methanphosphonsäure (= 1,0 Mol pro 1 Mol Cellulose) bei 80° C während 3 h durchgeführt. Es wird nach den Angaben in Beispiel 1 aufgearbeitet, das Mono-Na-Salz der PMC wird in einer Menge von 57 Gew.-Teilen erhalten und weist einen DS von 0,28 auf, ist in Wasser mit einem Rückstand von etwa 1% löslich und zeigt eine Viskosität von 475 mPa · s bei einer deutlichen Thixotropie der wäßrigen Lösung.

**Patentansprüche**

1. Verfahren zur Herstellung von wasserlöslichen Phosphonomethylethern der Cellulose aus Cellulose und Halogen-methanphosphonsäure oder einem ihrer Salze oder Säurederivate in einem wäßrigen, alkalischen Medium, dadurch gekennzeichnet, daß man pro Mol Cellulose

2,1 bis 15 Mol Hydroxid-Ionen und
0,4 bis 3,0 Mol Halogen-methanphosphonat-Ionen als Veretherungsmittel

in 3 bis 50 Gew.-Teilen, pro Gew.-Teil Cellulose, eines Gemisches aus einem inerten, bevorzugt mit $H_2O$ mischbaren organischen Lösemittel und $H_2O$, wobei der Wasseranteil 2 bis 60 Gew.-% beträgt, zur Reaktion bringt bis die Phosphonomethylcellulose einen DS von mindestens 0,13 aufweist.

2. Verfahren nach Anspruch 1, dadurch gekennzeichnet, daß man pro Mol Cellulose

2,5 bis 8 Mol Hydroxid-Ionen und
0,6 bis 1,5 Mol Halogen-methanphosphonat-Ionen als Veretherungsmittel

in 5 bis 20 Gew.-Teilen pro Gew.-Teil Cellulose eines Gemisches aus einem inerten, bevorzugt mit $H_2O$ mischbaren organischen Lösemittel und $H_2O$, wobei der Wasseranteil 3 bis 40 Gew.-% beträgt, zur Reaktion bringt bis die Phosphonomethylcellulose einen DS von mindestens 0,18 aufweist.

3. Verfahren nach Anspruch 1 oder 2, dadurch gekennzeichnet, daß als organisches Lösemittel Isopropanol und als Veretherungsmittel Chlor-methanphosphonsäure oder ihr Mono- oder Dinatriumsalz verwendet werden.

4. Verfahren nach einem der Ansprüche 1 bis 3, dadurch gekennzeichnet, daß die Veretherungsreaktion bei einer Temperatur von 70 bis 100° C durchgeführt wird.

**Claims**

1. A process for preparing water-soluble phosphonomethyl ethers of cellulose from cellulose and halogenomethane phosphonic acid or one of its salts or acid derivatives, in an aqueous, alkaline medium, the process being characterized in that, per mole of the cellulose,

from 2.1 to 15 moles of hydroxide ions and
from 0.4 to 3.0 moles of halogenomethane phosphonate ions as etherifying agent

are caused to react in 3 to 50 parts by weight, per part by weight of the cellulose, of a mixture which is composed of an inert, preferably water-miscible organic solvent and $H_2O$ and in which the proportion of water ranges from 2 to 60 percent by weight, the reaction being continued until the phosphonomethyl cellulose has a DS of at least 0.13.

2. A process as claimed in claim 1, in which, per mole of the cellulose,

from 2.5 to 8 moles of hydroxide ions and
from 0.6 to 1.5 mole of halogenomethane phosphonate ions as etherifying agent

are caused to react in 5 to 20 parts by weight, per part by weight of cellulose, of a mixture which is composed of an inert, preferably watermiscible organic solvent and $H_2O$ and in which the proportion of water ranges from 3 to 40 percent by weight, the reaction being continued until the phosphonomethyl cellulose has a DS of at least 0.18.

3. A process as claimed in claim 1 or claim 2, in which the organic solvent used is isopropanol and the etherifying agent used is chloromethane phosphonic acid or its monosodium salt or disodium salt.

4. A process as claimed in any of claims 1 to 3, in which the etherification reaction is conducted at a temperature ranging from 70° C to 100° C.

**Revendications**

1. Procédé pour préparer des éthers phosphonométhyl de cellulose solubles dans l'eau, à partir de cellulose et d'acide halogéno-méthane phosphonique ou d'un de ses sels ou dérivés d'acide dans un milieu alcalin aqueux, caractérisé en ce que, par mole de cellulose, on fait reagir

de 2,1 à 15 moles d'ions hydroxyde et
de 0,4 à 3,0 moles d'ions halogéno-méthanephosphonate comme agent d'éthérification

dans de 3 à 50 parties en poids, par partie en poids de cellulose, d'un mélange constitué d'un solvant organique inerte, de préférence miscible à l'eau, et de $H_2O$, la proportion d'eau atteignant de 2 à 60% en poids, jusqu'à ce que la phosphonométhylcellulose ait un DS d'au moins 0,13.

2. Procédé selon la revendication 1, caractérisé en ce que, par mole de cellulose, on fait réagir

de 2,5 à 8 moles d'ions hydroxyde et
de 0,6 à 1,5 moles d'ions halogéno-méthanephosphonate comme agent d'éthérification

dans de 5 à 20 parties en poids, par partie en poids de cellulose, d'un mélange constitué d'un solvant organique inerte, de préférence miscible à l'eau, et de $H_2O$, la proportion d'eau atteignant de 3 à 40% en poids jusqu'à ce que la phosphonométhylcellulose ait un DS d'au moins 0,18.

3. Procédé selon l'une des revendications 1 et 2, caractérisé en ce que comme solvant organique, on utilise l'isopropanol et comme agent d'éthérification on utilise l'acide chloro-méthanephosphonique ou son sel mono- ou di-sodique.

4. Procédé selon l'une quelconque des revendications 1 à 3, caractérisé en ce que la réaction d'éthérification est conduite à une température de 70 à 100° C.